Europäisches Patentamt

European Patent Office

Office européen des brevets

(11) Veröffentlichungsnummer: **0 307 900**
**A2**

(12) **EUROPÄISCHE PATENTANMELDUNG**

(21) Anmeldenummer: 88115067.6

(22) Anmeldetag: 15.09.88

(51) Int. Cl.⁴: **C08L 63/00** , **C08L 89/06** ,
**C08J 3/02**

(30) Priorität: 18.09.87 DE 3731431

(43) Veröffentlichungstag der Anmeldung:
22.03.89 Patentblatt 89/12

(84) Benannte Vertragsstaaten:
DE FR GB IT

(71) Anmelder: **Battelle-Institut e.V.**
**Am Römerhof 35 Postfach 900 160**
**D-6000 Frankfurt/Main 90(DE)**

(72) Erfinder: **Menke, Klaus, Dr.**
**Näherweg 11**
**D-7520 Bruchsal(DE)**
Erfinder: **Wollmann, Klaus**
**Bahnhofstrasse 33**
**D-6250 Limburg 7(DE)**
Erfinder: **Frische, Rainer, Dr.**
**Schüttenhelmweg 60**
**D-6000 Frankfurt am Main(DE)**

(74) Vertreter: **Sartorius, Peter, Dipl.-Ing.**
**Battelle-Institut e.V. Abteilung Patente Am**
**Römerhof 35**
**D-6000 Frankfurt am Main 90(DE)**

(54) **Reaktives Emulsionsmittel für Epoxyharze.**

(57) Als reaktives Emulsionsmittel zur Emulgierung von Epoxyharzen in kaltem Wasser wurde also Gelatinehydrolysat gefunden. Es wird bei der Aushärtung der getrockneten Harzmasse ohne Festigkeitsverlust in das Polymergerüst eingebaut und kann so für die Formulierung von wäßrigen, preiswerten umwelt- und verarbeitungsfreundlichen Anstrich- und Bindemitteldispersionen herangezogen werden.

EP 0 307 900 A2

## Reaktives Emulsionsmittel für Epoxyharze

Epoxyharze, insbesondere solche, die auf der Basis von Diglycidylethern des Bisphenol A aufgebaut sind und heute in großen Mengen für diverse Anwendungen eingesetzt werden, sind nicht wasserlöslich und ohne tensidische Zusätze nicht im Wasser emulgierbar.

Bei Anstrichstoffen und Bindemittelsystemen ist es jedoch angezeigt, verarbeitungs- und umweltfreundliche Kunstharzsysteme und damit lösemittelfreie wäßrige Dispersionen einzusetzen. Herkömmliche tensidische Emulgatoren wie Polyethylen- oder Propylenglykolether -ester oder amide stellen zwar die Emulgierbarkeit von Epoxyharzen her, wirken jedoch häufig weichmachend und festigkeitsmindernd, da sie nicht eingebunden werden.

Der vorliegenden Erfindung liegt daher die Aufgabenstellung zugrunde, ein reaktives Emulsionsmittel für Epoxyharze zu finden, das auch bei hohen Anteilen erlaubt, die feste Harzmasse ohne Festigkeitsverminderung auszuhärten. Ebenso soll es umwelt- und verarbeitungsfreundlich sein.

Diese Aufgabe wird erfindungsgemäß dadurch gelöst, daß in kaltem Wasser gut lösliche hydrolisierte, kurzkettige, oligo Proteine, vorzugsweise Gelatinehydrolysat, als reaktives Emulsionsmittel im Konzentrationsbereich von 5 bis 90 Gew.%, vorzugsweise 10 bis 80 Gew.%, eingesetzt werden.

Zwar ist die Verwendung von nicht hydrolisierter Gelatine als Schutzkolloid für Polyurethanemulsionsbeschichtungen zur Oberflächenbehandlung von Leder, ebenso wie bei der Suspensionspolymerisation von Vinylchlorid, sowie Styroldivinylbenzol/Vinylacetat-Mischungen bekannt (vgl. z.B. J.Chem.Soc.Ind.Chem.Sect. 1953, 56 S.356/358, US-Patente 3 784 491, 2 836 585, 285 367 und 2 833 754). Im Unterschied zu Gelatinehydrolysat ist Gelatine jedoch nicht in hohen Konzentrationen und nicht in kaltem Wasser löslich. Ebenso wirkt die Gelatine bei den vorstehenden Anwendungen nicht als reaktives Emulsions- oder Dispergiermittel, das bei der Polymerisation in ein dreidimensional vernetztes Polymergerüst eingebaut wird.

Gelatinehydrolysat bildet in Wasser selbst bei einer Konzentration von 80 Gew.% eine niedrigviskose Lösung aus, die Epoxyharze und Härter sowie Beschleuniger Additive, Pigmente und Füllstoffe zu emulgieren und dispergieren vermag.

Im Unterschied zu anderen tensidischen Emulgatoren und oberflächenaktiven, seifenähnlichen Verbindungen wird Gelatinehydrolysat bei der Trocknung und Aushärtung der mit Epoxyharz aufgebauten Bindemittelsysteme durch chemische Reaktion in das sich bildende Polymergerüst eingebaut.

Neben seiner Emulgatorfunktion wirkt Gelatinehydrolysat deshalb in Anteilen bis zu 90 Gew.% der festen Harzmasse als reaktiver Verschnitt von Epoxyharzen, der die mechanischen Eigenschaften nach der Aushärtung nicht oder nur unwesentlich beeinträchtigt.

Da Gelatinehydrolysat als Abfallprodukt bei der Gelatineherstellung anfällt, ist es besonders preisgünstig und erhöht damit die Wirtschaftlichkeit der Formulierung von Anstrichstoffen und Bindemittelsystemen mit emulgierten Epoxyharzen. Derart hergestellte Emulsionen oder Dispersionen sind nicht oder nur unwesentlich toxisch, umwelt- und verarbeitungsfreundlich und im getrockneten ausgehärteten Zustand schwer entflammbar.

Der Zusatz von Gelatinehydrolysat kann in einer breiten Konzentrationsspanne von 5 bis 90 Gew.%, bezogen auf die gesamte Harzmasse, erfolgen.

Weitere Hilfstenside werden entweder gar nicht oder nur in geringer Konzentration benötigt. Mit der Harzemulgierung können durch Gelatinehydrolysat auch Amin-, Amid- und Anhydridhärter von Epoxyharzen, Beschleuniger wie tertiäre organische Amine, Lewis- oder Protonensäuren, Antioxidantien, Verlaufsmittel, Viskositätseinsteller, Pigmente, Füllstoffe u.a. Additive emulgiert oder dispergiert werden.

Als reaktives Emulsionsmittel zur Emulgierung von Epoxyharzen in kaltem Wasser wurde also Gelatinehydrolysat gefunden. Es wird bei der Aushärtung der getrockneten Harzmasse ohne Festigkeitsverlust in das Polymergerüst eingebaut und kann so für die Formulierung von wäßrigen, preiswerten umwelt- und verarbeitungsfreundlichen Anstrich- und Bindemitteldispersionen herangezogen werden.

Beispiel

In einer Lösung von 360 g Gelatinehydrolysat in 240 g Wasser werden 160 g Epoxyharz vom Äquivalentgewicht 200 und einer Viskosität von 1700 mPas zusammen mit 84 g eines Aminoamidhärters mit einem Äquivalentgewicht von 105 und einer Viskosität von 750 mPas sowie 4 g eines Antioxidationsmittels vom p-Aminodiphenylamintyp, 8 g 2.4-Dihydroxybenzophenon, 2 g Farbstoff, 10 g Titandioxid und 20 g thixotropierendes Silikatpigment mit einem Hochgeschwindigkeitsrührer dispergiert.

Mit dieser Dispersion werden Eisenbleche beschichtet, und die hergestellten Überzüge 30 Minuten bei 120°C gehärtet. Die Beschichtungen zeigen gute Werte in Bezug auf Haftfestigkeit, Porenprüfung, Biegetest, Korrosionsbeständigkeit und Gitterschnitt.

**Ansprüche**

1. Reaktives Emulsionsmittel für Epoxyharze zur Emulgierung in kaltem Wasser,
**dadurch gekennzeichnet,**
daß es aus hydrolysierten, kurzkettigen, oligomeren Proteinen besteht, die in kaltem Wasser gut löslich sind.

2. Reaktives Emulsionsmittel nach Anspruch 1,
**dadurch gekennzeichnet,**
daß es aus Gelatinehydrolysat besteht.

3. Reaktives Emulsionsmittel nach Anspruch 1 oder 2,
**dadurch gekennzeichnet,**
daß die daraus hergestellte Emulsion etwa 5 bis 90 Gew.%, vorzugsweise etwa 10 bis 80 Gew.%, des Emulsionsmittels enthält.

4. Verwendung eines reaktiven Emulsionsmittels nach einem der Ansprüche 1 bis 3 zur Herstellung einer Anstrichoder Bindemitteldispersion.